Europäisches Patentamt

European Patent Office

Office européen des brevets

(19)

(11) EP 0 756 194 B1

(12) **EUROPÄISCHE PATENTSCHRIFT**

(45) Veröffentlichungstag und Bekanntmachung des Hinweises auf die Patenterteilung:
**27.08.2003 Patentblatt 2003/35**

(51) Int Cl.$^7$: **G02F 1/35**, G02F 1/37

(21) Anmeldenummer: **96110522.8**

(22) Anmeldetag: **28.06.1996**

(54) **Laser mit Frequenzvervielfachung**

Laser with frequency multiplication

Laser à multiplication de fréquence

(84) Benannte Vertragsstaaten:
**DE FR GB**

(30) Priorität: **26.07.1995 DE 19527337**

(43) Veröffentlichungstag der Anmeldung:
**29.01.1997 Patentblatt 1997/05**

(73) Patentinhaber: **Coherent Lübeck GmbH**
**23569 Lübeck (DE)**

(72) Erfinder:
• **Kortz, Hans-Peter, Dr.**
**23689 Pansdorf (DE)**
• **Seelert, Wolf, Dr.**
**23564 Lübeck (DE)**

(74) Vertreter: **Klunker . Schmitt-Nilson . Hirsch**
**Winzererstrasse 106**
**80797 München (DE)**

(56) Entgegenhaltungen:
EP-A- 0 517 518      EP-A- 0 649 049
DE-A- 2 522 338      US-A- 4 346 314

• **APPLIED OPTICS, Bd. 32, Nr. 6, 20.Februar 1993, Seiten 971-975, XP002018700 R.WU: "High-efficiency and compact blue source: intracavity frequency tripling by using LBO and BBO without the influence of birefringence"**

**Beschreibung**

Die Erfindung betrifft einen Laser mit einem ersten als Frequenzverdoppler wirkenden optisch nichtlinearen Kristall und mindestens einem in Ausbreitungsrichtung der von dem Laser erzeugten Laserstrahlung dahinter angeordneten weiteren als Frequenzvervielfacher wirkenden optisch nichtlinearen Kristall.

Zur Frequenzvervielfachung von Laserlicht werden sogenannte optisch nichtlineare Kristalle eingesetzt, das sind Kristalle, in denen nichtlineare optische Effekte besonders stark ausgeprägt sind. Wird in solch einem Kristall eine Lichtwelle mit der Frequenz f(1) (Grundwelle) eingestrahlt, so ergibt sich ein optisch nichtlinearer Anteil der Polarisation, der mit der doppelten Frequenz f(2) = 2 f(1) schwingt. Mit dieser Frequenz wird eine Lichtwelle, die zweite Harmonische, abgestrahlt. Um maximale Intensität in Richtung der eingestrahlen Welle zu erreichen, müssen die Grundwelle und die zweite Harmonische beim Durchlauf durch den Kristall in Phase bleiben. Für diese Phasenanpassung müssen die Brechungsindizes n(1), n(2) der beiden Wellen im Kristall gleich sein, was mit Hilfe der Doppelbrechung erreicht werden kann.

Für die Frequenzvervielfachung werden zwei Typen von Kristallen verwandt, die sich in der Art der Phasenanpassung unterscheiden: Typ-I-Kristalle und Typ-II-Kristalle.

In einem optisch einachsigen Kristall hat der Brechungsindex n(o) für den ordentlichen Strahl einen anderen Wert als der Brechungsindex n(e) für den außerordentlichen Strahl Als ordentlicher Strahl wird Licht bezeichnet, welches senkrecht zur Hauptschnittebene polarisiert ist, während der außerordentliche Strahl parallel zu der Hauptschnittebene polarisiert ist. Die Hauptschnittebene des Kristalls ist durch die Einfallsrichtung des Lichtstrahles und die optische Achse des Kristalls definiert.

Die Grundwelle und die zweite Harmonische sind senkrecht zueinander polarisiert. Wird die Polarisationsrichtung der Grundwelle z.B. senkrecht zum Hauptschnitt gelegt, so durchläuft sie den Kristall als ordentlicher Strahl, und die zweite Harmonische stellt den außerordentlichen Strahl dar. Der Brechungsindex n(1,o) für die Grundwelle hat für alle Einstrahlrichtungen in den Kristall den gleichen Wert, hingegen ist der Brechungsindex n(2,e) für die zweite Harmonische von dem Einstrahlwinkel abhängig. Trägt man in einem Koordinatensystem x, y, z, in dem die z-Achse mit der optischen Achse des Kristalls zusammenfalle, die Werte der Brechungsindizes für alle Einstrahlwinkel auf, so erhält man für den ordentlichen Strahl eine Kugeloberfläche und für den außerordentlichen Strahl die Oberfläche eines Rotationsellipsoids, symmetrisch zum Koordinatenursprung. Bei geeigneten Werten von n(1,o) und n(2,e) schneiden sich die beiden Oberflächen in zwei Kreislinien. Auf diesen Kreislinien sind die beiden Brechungsindizes gleich, es liegt Phasenanpassung vor.

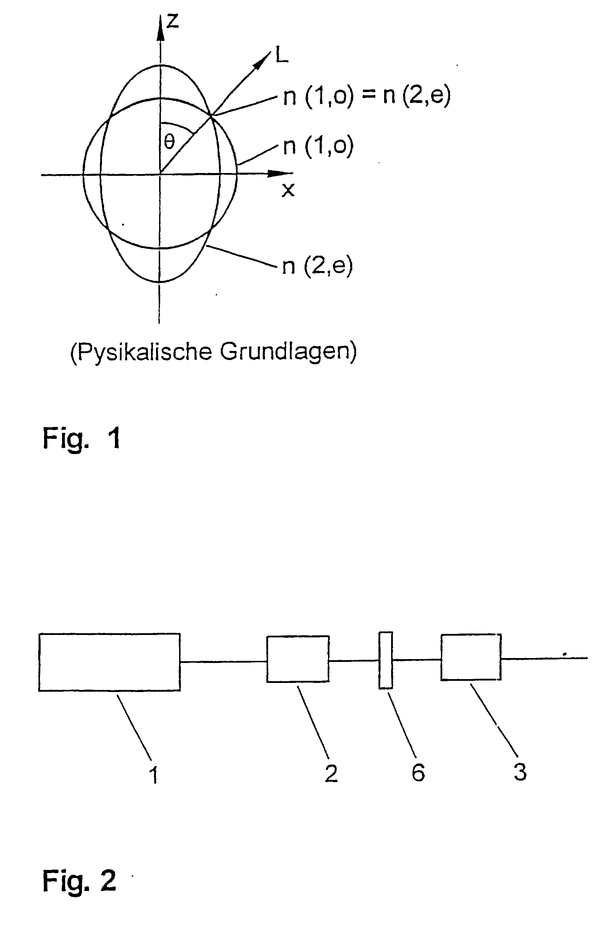

In Fig. 1 ist ein Schnitt durch die eben beschriebene Figur dargestellt. Für n(1,o) ergibt sich jetzt ein Kreis, für n(2,e) eine Ellipse. Die Linie L stellt einen Lichtstrahl dar, für den Phasenanpassung gilt. Er läuft unter einem Winkel θ zur optischen Achse des Kristalls. Weicht der Verlauf des Strahls in der Zeichenebene um einen kleinen Winkelbetrag ab, so ergibt sich eine relativ große Abweichung der Brechungsindizes n(1,o) und n(2,e), die Phasenanpassung ist nicht mehr optimaL Weicht der Verlauf des Strahls senkrecht zur Zeichenebene um den gleichen Winkelbetrag ab, so ergibt sich eine sehr viel kleinere Abweichung der Brechungsindizes (der Strahl folgt in diesem Fall annähernd der kreisförmigen Schnittlinie von Kugel und Ellipsoid, auf der Phasenanpassung gilt).

Man bezeichnet den Winkelbereich, in dem noch gute Phasenanpassung gegeben ist, als Winkelakzeptanz des Kristalls. Die Richtung, in der eine Winkelabweichung zu einer großen Abweichung der Brechungsindizes führt, ist die Richtung des Kristalls mit kleiner Winkelakzeptanz. Entsprechend ist die dazu senkrechte Richtung die Richtung mit großer Winkelakzeptanz. Für eine optimale Phasenanpassung muß der Divergenzwinkel eines in den Kristall eingestrahlten Lichtstrahles kleiner sein als die Winkelakzeptanz.

Wird ein Lichtstrahl als primärer Strahl in einen Kristall gesandt, so wandert auf dem Weg durch den Kristall der frequenzvervielfachte Strahl zunehmend seitlich in der Hauptschnittebene von dem Verlauf des primären Strahls ab. Dieser "Walk-off-Effekt" genannte Vorgang ist je nach Kristallmaterial unterschiedlich stark ausgeprägt. Er wird durch einen Walk-off-Winkel, das ist der Winkel zwischen dem primärer Strahl und dem frequenzvervielfachten Strahl, quantifiziert. Der Walk-off-Effekt führt auch dazu, daß der Querschnitt des frequenzvervielfachten Strahls beim Austritt aus dem Kristall elliptisch verformt ist, wobei die große Halbachse der Ellipse in der Hauptschnittebene des Kristalls liegt.

Die aus einem optisch nichtlinearen Kristall austretenden Strahlen der Grundwelle und der zweiten Harmonischen können in einen zweiten optischen nichtlinearen Kristall geleitet werden, in dem zum Beispiel durch Mischung zusätzlich die dreifache Frequenz der Grundwelle erzeugt wird. Im Interesse eines guten Wirkungsgrades der Frequenzvervielfachung müssen sich die Strahlquerschnitte der Grundwelle und der zweiten Harmonischen in dem zweiten Kristall möglichst vollständig überlappen, denn nur in dem Überlappungsbereicht kann eine Mischung der Wellen stattfinden. Aus physikalischen Gründen hat aber der Strahl der Grundwelle einen um den Faktor 1,41 größeren Durchmesser als der der zweiten Harmonischen. Will man in einem weiteren Kristall auch noch durch Mischung der Grundfrequenz und der dritten Harmonischen die vierfache Frequenz der Grundwelle erzeugen, so führt der noch größere Unterschied in den Durchmessern der zu mischenden Strahlen zu einer schlechten Überlappung und damit zu einem schlechten Wirkungsgrad.

Ein Laser der genannten Art ist z.B. in der Veröffentlichung "Intracavity Fourth Harmonic Generation Using Three Pieces of LBO in a Nd:YAG Laser " von R. Wu, J. D. Myers und S. J. Hamlin in OSA Proceedings on Advanced Solid-State Lasers, 1994, Vol. 20, Tso Yee Fan and Bruce H. T. Chai (eds.) beschrieben worden. Es werden aber keine Maßnahmen zur Verbesserung der Strahlüberlappung oder der Phasenanpassung getroffen.

Aus der DE-A-25 22 338 ist ein Laser der im Obergriff des Anspruchs 1 genannten Art bekannt. Bei diesem Laser ist zur Vermeidung eines zu starken Walk-off-Effekts der nichtlineare Kristall in mehrere Teilkristalle (in Strahlrichtung) aufgeteilt, wobei die Kristalle in ihrer Reihenfolge abwechselelnd um 180° gedreht sind. Hierdurch wird der in dem einem Kristall zustandekommende Walk-off-Effekt im nachgeordneten Kristall kompensiert.

Aufgabe der Erfindung ist es, einen Laser gemäß dem Oberbegriff des Hauptanspruchs hinsichtlich des Wirkungsgrades der Erzeugung höherer Harmonischer zu verbessern.

Die Verbesserung wird erreicht durch die Kennzeichnungsmerkmale des Anspruchs 1.

Der Walk-off-Effekt eines optisch nichtlinearen Kristalls wird erfindungsgemäß vorteilhaft ausgenutzt, um die Überlappung der Strahlquerschnitte des primären und frequenzvervielfachten Strahls bei der nachfolgenden Mischung in einem weiteren Kristall zu verbessern. Der durch den Walk-off-Effekt in der Hauptschnittrichtung des ersten Kristalls verbreiterte Querschnitt des frequenzvervielfachten Strahls hat eine größere Überlappungsfläche mit dem primären Strahl als ein Strahl, der ohne Walk-off-Effekt einen runden Querschnitt behalten hätte.

Die Überlappung kann noch weiter verbessert werden, indem die Auswirkung des Walk-off-Effekts durch die Längen des ersten bis vorletzten Kristalls jeweils so gesteuert wird, daß in dem jeweils nachfolgenden Kristall die Überlappung optimal ist. Die optimale Überlappung liegt dann vor, wenn im Kristall die große Halbachse der Querschnittsfläche des frequenzvervielfachten Strahls, der mit dem primären Strahl gemischt werden soll, etwa mit dem Durchmesser des Querschnitts des primären Strahls übereinstimmt. Die dazu nötige Länge Lk des jeweiligen Kristalls hängt ab von der Größe des Walk-off-Winkels φ und dem Unterschied zwischen dem Durchmesser Dp des primären Strahls und dem Durchmesser Df des mit diesem primären Strahl zu überlagernden frequenzvervielfachten Strahls, den er ohne Walk-off-Effekt hätte. Die Länge Lk wird näherungsweise nach folgender Formel berechnet:

$$Lk \approx (Dp - Df) / \tan \varphi$$

Damit sich aus der Formel eine Länge des Kristalls ergibt, die auch den sonstigen optischen und mechanischen Anforderungen gerecht werden kann, muß der Walk-off-Winkel in einem Bereich von ca. 0,1° bis ca. 6° liegen.

Ein Strahl mit elliptischem Querschnitt hat in Richtung seiner großen Halbachse eine kleinere Divergenz als in Richtung seiner kleinen Halbachse.

Eine weitere Optimierung des Wirkungsgrades für die Erzeugung höherer Harmonischer ist dadurch zu erreichen, daß der elliptische Strahl mit seiner Richtung kleiner Divergenz parallel zu der Richtung mit kleiner Winkelakzeptanz bezüglich Phasenanpassung des nachfolgenden Kristalls orientiert wird. Die Verbesserung kommt dadurch zustande, daß eine Verschlechterung der Phasenanpassung durch zu große Strahldivergenz soweit wie möglich vermieden wird.

Liegen bei der gewählten Orientierung der Kristalle die Polarisationsrichtungen der Strahlen nicht in der durch den nachfolgenden Kristall geforderten Richtung, so können die Polarisationsrichtungen mit Polarisationsdrehern relativ zu der Orientierung der Halbachsen des elliptischen Strahls in eine passende Richtung gedreht werden.

Zwischen dem Laser und dem ersten Kristall und zwischen den einzelnen Kristallen können Fokussierungsoptiken zur Erhöhung der Leistungsdichte des Laserlichtes in den Kristallen angeordnet werden.

Werden keine Fokussierungsoptiken eingesetzt, so werden die Kristalle vorzugsweise dicht hintereinander angeordnet. Der Abstand kann Null betragen, die Kristalle liegen dann direkt aneinander. Als Obergrenze für den Abstand wird ein Wert von ca. 20% der Rayleighlänge für die Wellenlänge des primären Strahls gewählt. Damit wird erreicht, daß die Kristalle von noch annähernd ebenen Wellenfronten durchlaufen werden.

Die Erfindung ist für Dauerstrich-und Pulslaser aller Art anwendbar, wobei die nichtlinearen Kristalle innerhalb oder außerhalb des Resonators des Lasers angeordnet sein können. Für diodengepumpte Laser ist die Erfindung besonders vorteilhaft anwendbar, da hier aufgrund der relativ niedrigen Ausgangsleistung des Lasers die Optimierung des Wirkungsgrades der Frequenzvervielfachung besonders wichtig ist.

Die Erfindung wird anhand von zwei Ausführungsbeispielen und der Zeichnung erläutert.

Es zeigen:

Fig. 1    eine graphische Darstellung der Brechungsindizes von ordentlichem und außerordentlichem Strahl über dem Einstrahlwinkel in einem Kristall (eine Erklärung der Fig. 1 findet sich in der Beschreibung weiter oben),

Fig. 2    einen Laser mit zwei optisch nichtlinearen Kristallen in schematischer Darstellung,

Fig. 3    die Querschnitte von primärem und frequenzverdoppelten Strahl bei optimaler Überlappung und

Fig. 4    einen Laser mit drei optisch nichtlinearen Kristallen in schematischer Darstellung.

Der in Fig. 2 dargestellte Laser mit Frequenzvervielfachung besteht aus dem eigentlichen Laser 1, der zum Beispiel ein Nd:YAG-Laser sein kann und Infrarotlasezstrahlung mit 1064 nm Wellenlänge abgibt, und zwei optisch nichtlinearen Kristallen 2 und 3.

Die Laserstrahlung wird als primäre Strahlung in einen ersten optisch nichtlinearen Kristall 2 geleitet. Der erste optisch nichtlineare Kristall 2 dient als Frequenzverdoppler und ist ein Typ-I-Kristall, der zum Beispiel aus Kaliumniobat besteht. Den Kristall 2 verläßt Licht der Grundwellenlänge 1064 nm (Infrarot) und in der Frequenz verdoppeltes Licht mit 532 nm Wellenlänge (Grün). Der Strahlquerschnitt des grünen Lichts ist durch den Walk-off-Effekt in dem Kristall 2 elliptisch verformt, der Querschnitt des infraroten Strahls ist weiterhin rund.

Beide Strahlen werden in einen zweiten optisch nichtlinearen Kristall 3 geleitet. Der Kristall 3 dient als Frequenzmischer für das infrarote und das grüne Laserlicht und liefert an seinem Ausgang neben infrarotem (1064 nm) und grünem (532 nm) Licht auch UV-Licht mit der dreifachen Frequenz der primären Strahlung (355 nm Wellenlänge). Der Kristall kann vom Typ I oder Typ II sein. In diesem Beispiel wird ein Typ-II-Kristall aus Lithiumborat verwandt.

Die Länge des ersten optisch nichtlinearen Kristalls 2, und damit die Auswirkung des Walk-off-Effekts auf den. Strahlquerschnitt des grünen Strahls ist so gewählt worden, daß sich die Querschnitte des infraroten und des grünen Strahls im zweiten optisch nichtlinearen Kristall 3 optimal überlappen. Das Optimum ist erreicht, wenn die Summe der Strahlungsleistungen von primärem und frequenzvervielfachtem Strahl innerhalb der Überlappungsfläche maximal ist.

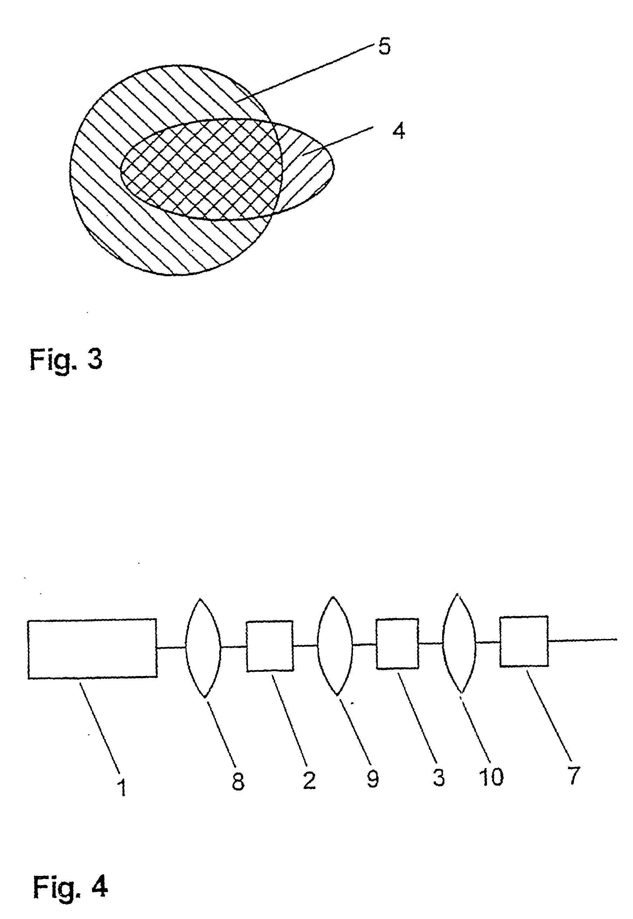

Fig. 3 zeigt diese optimale Überlappung, bei der die große Halbachse des elliptisch verformten Querschnitts 4 des grünen Strahls etwa gleich dem Durchmesser des Querschnitts 5 des infraroten Strahls ist. Bedingt durch den Walk-off-Effekt ist der Querschnitts 4 nicht mittig zu dem Querschnitts 5 angeordnet.

Die Anordnung der Hauptschnittebene des ersten optisch nichtlinearen Kristalls 2 zu der des zweiten optisch nichtlinearen Kristalls 3 wurde so gewählt, daß die Richtung der kleineren Divergenz des grünen Strahls parallel zu der Richtung mit kleiner Winkelakzeptanz des zweiten optisch nichtlinearen Kristalls 3 liegt. Dadurch wird eine möglichst gute Phasenanpassung zwischen infrarotem und grünem Licht im Kristall 3 erreicht.

Optisch nichtlineare Kristalle benötigen für ihre Funktion bestimmte Richtungen der Polarisationsebenen der eingestrahlten Lichtwellen untereinander und relativ zur Hauptschnittebene des Kristalls. Durch eine Verdrehung des ersten optisch nichtlinearen Kristalls 2 um die Achse, in der die Laserstrahlung läuft, kann seine Hauptschnittebene zu der Polarisationsrichtung des Lasers 1 ausgerichtet werden. Durch Verdrehung des zweiten optisch nichtlinearen Kristalls 3 relativ zum ersten optisch nichtlinearen Kristall 2 kann dessen Hauptschnittrichtung zu der Polarisationsrichtung der den ersten nichtlineraren Kristall 2 verlassenen Strahlung ausgerichtet werden. Sollte bei dieser Anordnung die Richtung der kleinen Divergenz des grünen Strahls nicht parallel zu der Richtung mit kleiner Winkelakzeptanz des zweiten optisch nichtlinearen Kristalls 3 sein, so kann mit einem Polarisationsdreher 6 die Polarisationsrichtung des infraroten Strahls gemeinsam mit der des grünen Strahls passend gedreht werden. Die Richtung mit kleiner Divergenz des grünen Strahls behält dabei ihre Orientierung. Ein solcher Polarisationsdreher könnte z.B. so gebaut sein, daß er unter Ausnutzung der Dispersion für infrarotes und grünes Licht als Lambda-Halbe-Plättchen wirkt.

Die optisch nichtlinearen Kristalle 2 und 3 sind mit ihren Kristallebenen so zueinander angeordnet, das der Walk-off-Effekt des zweiten optisch nichtlinearen Kristalls 3 in die entgegengesetzte Richtung wirkt wie der des ersten optisch nichtlinearen Kristalls 2. Laufen im ersten optisch nichtlinearen Kristall 2 infraroter und grüner Strahl z.B. in der Zeichenebene nach oben auseinander, so laufen sie in dem zweiten optisch nichtlinearen Kristalls 3 in der Zeichenebene wieder nach unten zusammen. Diese Strahlführung ist für eine optimale Überlappung der Stahlen wichtig.

Fig. 4 zeigt den gleichen Aufbau wie Fig. 2, erweitert um einen dritten optisch nichtlinearen Kristall 7 und um drei Fokussierungsoptiken 8, 9, 10, die jeweils vor den Kristallen 2, 3, 7 angeordnet sind. Ein Polarisationsdreher ist in diesem Beispiel nicht vorgesehen. Der dritte optisch nichtlineare Kristall 7 kann zum Beispiel auch ein Typ-II-Kristall aus Lithiumborat sein. Er mischt die in ihn eingestrahlten Wellenlängen 1064 nm und 355 nm und erzeugt UV-Licht mit der vierfachen Frequenz der primären Strahlung (Wellenlänge 266 nm).

Der Walk-off-Effekt des zweiten optisch nichtlinearen Kristalls 3 ist so abgestimmt, daß die Überlappung der primären Strahlung (1064 nm) und des UV-Lichts (355 nm) optimal wird. Die Richtung der kleinen Divergenz des UV-Strahls (355 nm) wird in die Richtung mit kleiner Winkelakzeptanz bezüglich Phasenanpassung des dritten optisch nichtlinearen Kristalls 7 gelegt.

**Patentansprüche**

1. Laser mit einem ersten als Frequenzverdoppler wirkenden optisch nichtlinearen Kristall, der eine Grundwelle und deren erste Oberwelle liefert, und mindestens einem in Ausbreitungsrichtung der von dem Laser erzeugten Laserstrahlung dahinter angeordneten weiteren, als Frequenzvervielfacher wirkenden optisch nichlinearen Kristall, wobei die optisch nichtlinearen Kristalle (2, 3, 7) derart zueinander angeordnet sind, daß jeweils in der Walk-off-Ebene des einen Kristalls (2, 3) die Richtung mit kritischer Phasenanpassung des nachfolgenden Kristalls (3, 7) liegt, **dadurch gekennzeichnet, daß** der erste bis vorletzte optisch nichtlineare Kristall (2, 3) jeweils einen Walk-off-Winkel im Bereich von 0,1° bis 6° aufweisen und jeder weitere nicht lineare Kristall (3, 7) von dem ersten Kristall verschieden ist und eine Grundwelle und eine von deren Oberwellen zu einer dieser Oberwelle als nächstes nachgeordneten Oberwelle mischt.

2. Laser nach Anspruch 1, **dadurch gekennzeichnet, daß** die Längen des ersten bis vorletzten Kristalls (2, 3) so gewählt werden, daß jeweils die Länge der großen Halbachse der Querschnittsfläche eines ersten frequenzvervielfachten Laserstrahls etwa gleich dem Durchmesser der Querschnittsfläche eines zweiten, mit dem ersten zu überlagernden Laserstrahls wird.

3. Laser nach Anspruch 1 oder 2, **dadurch gekennzeichnet, daß** zwischen den optisch nichtlinearen Kristallen (2, 3, 7) mindestens ein Polarisationsdreher (6) angeordnet ist, der die Polarisationsrichtung der zu mischenden Laserstrahlen gemeinsam dreht, um einen entsprechenden Typ der Phasenanpassung des folgenden Kristalls anzupassen.

4. Laser nach einem der Ansprüche 1 bis 3, **dadurch gekennzeichnet, daß** der maximale Abstand zwischen zwei aufeinanderfolgenden optisch nichtlinearen Kristallen (2, 3; 3, 7) ca. 20% der Rayleighlänge für die Wellenlänge der von dem Laser erzeugte Laserstrahlung beträgt.

5. Laser nach einem der Ansprüche 1 bis 3, **dadurch gekennzeichnet, daß** in Ausbreitungsrichtung der von dem Laser erzeugten Laserstrahlung vor mindestens einem der optisch nichtlinearen Kristalle (2, 3, 7) eine Fokussierungsoptik (8, 9, 10) angeordnet ist.

## Claims

1. A laser with a first optically nonlinear crystal acting as a frequency doubler and providing a fundamental and the first harmonic thereof, and at least one further optically nonlinear crystal acting as a frequency multiplier disposed therebehind in the direction of propagation of the laser radiation produced by the laser, the optically nonlinear crystals (2, 3, 7) being disposed relative to one other in such a way that the walk-off plane of one crystal (2, 3) contains the direction with critical phase matching of the following crystal (3, 7), **characterized in that** the first to second last optically nonlinear crystals (2, 3) each have a walk-off angle in the range of 0.1° to 6°, and each further nonlinear crystal (3, 7) is different from the first crystal and mixes a fundamental and one of the harmonics thereof into a harmonic next following said harmonic.

2. A laser according to claim 1, **characterized in that** the lengths of the first to second last crystals (2, 3) are selected so that the length of the large semiaxis of the cross-sectional area of a first frequency-multiplied laser beam is about equal to the diameter of the cross-sectional area of a second laser beam to be superimposed with the first.

3. A laser according to claim 1 or 2, **characterized in that** at least one polarization rotator (6) is disposed between the optically nonlinear crystals (2, 3, 7) for jointly rotating the polarizing directions of the laser beams to be mixed for adapting a corresponding type of phase matching of the following crystal.

4. A laser according to any of claims 1 to 3, **characterized in that** the maximum distance between two successive optically nonlinear crystals (2, 3; 3, 7) is approx. 20% of the Rayleigh length for the wavelength of the laser radiation produced by the laser.

5. A laser according to any of claims 1 to 3, **characterized in that** a focusing optic (8, 9, 10) is disposed before at least one of the optically nonlinear crystals (2, 3, 7) in the direction of propagation of the laser radiation produced by the laser.

## Revendications

1. Laser avec un premier cristal optiquement non linéaire agissant comme doubleur de fréquence, qui délivre une onde de base et la première onde harmonique de celle-ci, et au moins un autre cristal optiquement non linéaire, disposé à l'arrière dans la direction de diffusion du rayonnement laser émis par le laser et agissant comme multiplicateur de fréquence, dans lequel les cristaux optiquement non linéaires (2, 3, 7) sont disposés les uns par rapport aux autres de telle sorte que chaque fois dans le plan walk-off du cristal (2, 3) la direction se trouve avec un accord de phase critique du cristal suivant (3, 7), **caractérisé en ce que** le premier à l'avant-dernier cristal optiquement non linéaire. (2, 3) présentent chaque fois un angle walk-off dans le domaine de 0,1° à 6°, et que tout autre cristal non linéaire (3,7) se différencie du premier cristal, et qu'une onde de base et une parmi les ondes harmoniques de celle-ci se mélangent à l'une ces ondes harmoniques en tant que la prochaine onde harmonique venant après.

2. Laser selon la revendication 1, **caractérisé en ce**

**que** la longueur du premier à l'avant-dernier cristal (2, 3) soit choisie de telle sorte que chaque fois la longueur du grand demi-axe de la surface transversale d'un premier rayon laser multiplié en fréquence soit environ égale au diamètre de la surface transversale d'un deuxième rayon laser à superposer au premier.

3. Laser selon la revendication 1 ou 2, **caractérisé en ce que**, entre les cristaux optiquement non linéaires (2, 3, 7), au moins un rotateur de polarisation (6) soit disposé, tournant ensemble la direction de polarisation des rayons laser à mélanger, afin d'adapter un type correspondant à l'accord de phase du cristal suivant.

4. Laser selon l'une quelconque des revendications 1 à 3, **caractérisé en ce que** l'écart maximal entre deux cristaux optiquement non linéaires qui se suivent (2, 3 ; 3, 7) s'élève à environ 20% de la longueur de Rayleigh pour la longueur d'onde du rayonnement laser émis par le laser.

5. Laser selon l'une quelconque des revendications 1 à 3, **caractérisé en ce qu'**une optique de focalisation (8, 9, 10) est disposée dans la direction de diffusion du rayonnement laser émis par le laser avant au moins un des cristaux optiquement non linéaires (2, 3, 7).

$n (1,o) = n (2,e)$

$n (1,o)$

$n (2,e)$

(Pysikalische Grundlagen)

# Fig. 1

1    2    6    3

# Fig. 2

5

4

**Fig. 3**

1    8    2    9    3    10    7

**Fig. 4**

8